Europäisches Patentamt

European Patent Office

Office européen des brevets

(19)

(11) EP 0 768 522 A2

## (12) DEMANDE DE BREVET EUROPEEN

(43) Date de publication:
16.04.1997 Bulletin 1997/16

(51) Int Cl.⁶: **G01N 21/27**

(21) Numéro de dépôt: **96402187.7**

(22) Date de dépôt: **15.10.1996**

(84) Etats contractants désignés:
**BE CH DE DK ES GB IT LI NL SE**

(30) Priorité: **16.10.1995 FR 9512087**

(71) Demandeur: **ELF ANTAR FRANCE**
**92400 Courbevoie (FR)**

(72) Inventeurs:
• **Ricoux, Philippe**
**69530 Brignais (FR)**
• **Saby, Claude Alain**
**69500 Bron (FR)**

(74) Mandataire: **Ohresser, François**
**Elf Aquitaine**
**Division Proprieté Industrielle**
**Tour Elf**
**92078 Paris La Défense Cédex 45 (FR)**

(54) **Procédé de suivi et de contrôle du fonctionnement d'un analyseur et d'une unité de fabrication à laquelle il est raccordé**

(57)     La présente invention concerne un procédé de suivi et de contrôle du fonctionnement d'un analyseur et du fonctionnement d'une unité de fabrication à laquelle il est raccordé.

Ce procédé est caractérisé en ce qu'il comprend une opération de calibration multivariée d'un analyseur maître, des opérations périodiques de standardisation des signaux délivrés par un analyseur esclave alimenté par des produits de standardisation, des opérations de transfert de calibration entre les analyseurs maître et esclave, des opérations de surveillance de l'évolution dans le temps de la valeur d'un indicateur de suivi et de contrôle en appliquant une méthode de suivi et de contrôle.

EP 0 768 522 A2

**Description**

**DOMAINE TECHNIQUE**

La présente invention concerne un procédé de suivi et de contrôle du fonctionnement d'un analyseur et du fonctionnement d'une unité de fabrication à laquelle il est raccordé.

Elle trouve son application dans les laboratoires de contrôle, les laboratoires de recherche, les unités de fabrication des industries chimiques, pétrolières, pharmaceutiques, cosmétologiques et agroalimentaires.

**ETAT DE LA TECHNIQUE ANTERIEURE**

De nombreux analyseurs tels que les spectromètres utilisés pour déterminer les caractéristiques physiques ou chimiques d'un échantillon de produit à analyser, nécessitent une calibration.

Cette calibration consiste à établir un modèle qui représente la relation mathématique entre une caractéristique du produit à analyser et le signal délivré par l'analyseur.

Cette opération est longue et nécessite l'utilisation de plusieurs dizaines de produits, dont les caractéristiques ont été déterminées par des mesures directes.

Cette opération ayant été effectuée sur un analyseur donné appelé analyseur maître, il est particulièrement intéressant d'utiliser le modèle ainsi obtenu sur un (ou plusieurs) autre(s) analyseur(s) de même nature appelé(s) analyseur (s) esclave(s), pour éviter de refaire les opérations de calibration plusieurs fois avec ces appareils.

Pour tenir compte des différences de réponses instrumentales entre l'analyseur maître et l'analyseur esclave lesquelles évoluent au cours du temps par exemple en fonction des conditions de fonctionnement et du vieillissement des composants de l'analyseur esclave, on corrige les signaux délivrés par l'analyseur esclave en les soumettant à des opérations périodiques de standardisation.

Pour effectuer ces opérations de standardisation, plusieurs méthodes peuvent être mises en oeuvre.

A titre d'exemple on peut citer la méthode de SHENCK qui est décrite dans le brevet US 4,866,644 et la méthode décrite dans la demande de brevet français n° 95 05957.

Toutes ces méthodes comportent un certain nombre d'étapes au cours desquelles sont calculés des paramètres de transfert de calibration, qui aboutissent au calcul de la correction des signaux de l'analyseur esclave.

Aucune de ces méthodes ne permet d'identifier l'origine des dérives, des dysfonctionnements, des perturbations tout au long de la chaîne d'analyse, et d'avertir l'utilisateur de l'apparition de phénomènes qui peuvent conduire à des résultats erronés malgré la correction apportée par la standardisation, celle ci n'étant valable que dans une plage donnée de fonctionnement de l'analyseur esclave et dans les limites de validité du modèle de calibration.

Ces méthodes ne donnent aucune indication sur le fonctionnement des unités de fabrication auxquelles les analyseurs sont raccordés. Pour effectuer le suivi et le contrôle d'une unité de fabrication une méthode connue consiste à mettre en oeuvre des cartes de contrôle multivariées qui nécessitent la connaissance de nombreuses variables caractéristiques du fonctionnement du procédé de fabrication. Dans de nombreux cas, ces variables ne sont pas mesurables ou pas mesurées pour des raisons techniques et/ou économiques.

De plus, les critères de suivi et de contrôle sont difficiles à déterminer.

**EXPOSE DE L'INVENTION**

La présente invention a justement pour objet de remédier à ces inconvénients, et notamment de fournir un procédé de suivi et de contrôle du fonctionnement d'un analyseur esclave et de l'unité de fabrication à laquelle il est raccordé.

Grâce à ce procédé, il est possible de mettre en évidence des perturbations, des dérives, des anomalies de fonctionnement de l'analyseur esclave et de la chaîne de mesure associée y compris l'unité de fabrication à laquelle il est raccordé, d'identifier les causes de ces dysfonctionnements et de prendre des dispositions adaptées à chaque situation : par exemple déclarer le résultat de l'analyse invalide et prévenir l'opérateur qui exploite l'unité à laquelle l'analyseur est raccordé et lui fournir des éléments pour prendre ses décisions.

Ce procédé trouve son application dans les laboratoires d'analyses et les unités de fabrication.

A cette fin la présente invention propose un procédé de suivi et de contrôle du fonctionnement d'un analyseur esclave et d'une unité de fabrication à laquelle il est raccordé, caractérisé en ce qu'il comprend une opération de calibration multivariée d'un analyseur maître, des opérations périodiques de standardisation des signaux délivrés par l'analyseur esclave alimenté par des produits de standardisation et une étape de transfert de calibration au cours de laquelle sont calculés des paramètres associés à un algorithme de transfert de calibration, et en ce que l'on choisit, d'une part, un desdits paramètres ou une combinaison mathématique d'au moins deux d'entre eux comme indicateur de suivi et de contrôle du fonctionnement de l'analyseur esclave et d'autre part une méthode de suivi et de contrôle, et en ce que à l'issue de chaque opération périodique de standardisation on surveille l'évolution dans le temps de la valeur de l'indicateur de suivi et de contrôle en appliquant la méthode de suivi et de contrôle, puis on vérifie le bon fonctionnement de l'analyseur esclave et celui de l'unité de fabrication à laquelle il est raccordé en identifiant les causes de l'évolution de la valeur de l'indicateur à partir, des résultats obtenus par l'application de la méthode de suivi et de contrôle et d'un diagramme causes / effets.

Selon une autre caractéristique de l'invention l'analyseur esclave et l'analyseur maître sont le même analyseur utilisé à des périodes de temps différentes.

Selon une autre caractéristique de l'invention après détection d'une dérive significative de l'indicateur de suivi et de contrôle on vérifie la validité des résultats de l'analyseur maître en le considérant comme l'analyseur esclave.

Selon une autre caractéristique de l'invention, lors des opérations de standardisation consistant pour au moins l'une d'entre elles, d'une part à décomposer en série les signaux délivrés par les analyseurs maître et esclave, et d'autre part à établir une relation mathématique entre les coefficients issus des décompositions en série, on choisit comme indicateur de suivi et de contrôle un des paramètres calculés pour définir ladite relation mathématique ou une combinaison mathématique d'au moins deux desdits paramètres.

Selon une autre caractéristique de l'invention, lors des opérations de standardisation consistant pour au moins l'une d'entre elles, d'une part à décomposer en série les signaux délivrés par les analyseurs maître et esclave, et d'autre part à établir une relation mathématique entre les coefficients issus des décompositions en série ladite relation mathématique étant représentée par des réseaux de neurones, on choisit comme indicateur de suivi et de contrôle un des paramètres calculés pour définir les réseaux de neurones ou une combinaison mathématique d'au moins deux desdits paramètres

Selon une autre caractéristique de l'invention, lors des opérations de standardisation dont au moins l'une d'entre elles, fait intervenir un calcul matriciel de coefficients, on choisit comme indicateur de suivi et de contrôle une matrice de coefficients issus dudit calcul ou une combinaison d'au moins deux matrices desdits coefficients.

Selon une autre caractéristique de l'invention la méthode de suivi et de contrôle met en oeuvre au moins une carte de contrôle monovariée.

Selon une autre caractéristique de l'invention la méthode de suivi et de contrôle met en oeuvre au moins une carte de contrôle multidimentionnelle.

Selon une autre caractéristique de l'invention la méthode de suivi et de contrôle met en oeuvre au moins un réseau de neurones.

Selon une autre caractéristique de l'invention les opérations de standardisation mettant en oeuvre au moins deux techniques différentes de standardisation le diagramme de causes / effets est réalisé à partir des coefficients issus d'au moins deux desdites techniques;

Selon une autre caractéristique de l'invention les signaux délivrés par les analyseurs maître et esclave sont soumis préalablement à des opérations de dérivation par rapport au temps.

## EXPOSE DETAILLE DE L'INVENTION

D'une manière générale le procédé de l'invention permet de suivre et de contrôler le fonctionnement d'un analyseur esclave raccordé à une unité de fabrication ou le fonctionnement d'un analyseur de laboratoire.

L'invention sera mieux comprise à l'aide de la description suivante de deux modes de réalisation donnés à titre d'exemples non limitatifs.

Selon un premier mode de réalisation, les analyseurs maître et esclave sont des spectromètres infrarouge qui mesurent des absorbances dans la gamme des longueurs d'ondes de 1076 à 1548 nm.

L'analyseur maître est un spectromètre de laboratoire et l'analyseur esclave un spectromètre raccordé à une unité de traitement d'hydrocarbures, pour déterminer une caractéristique de carburants destinés à l'alimentation de moteurs thermiques.

Le procédé de l'invention consiste à compléter les opérations connues de calibration et de standardisation des signaux par des opérations de suivi et de contrôle de l'analyseur esclave.

Les opérations de calibration consistent à établir un modèle à partir de chacun des signaux issus de l'analyse par l'analyseur maître de chaque carburant d'un jeu de carburants de calibration, dont la valeur de la caractéristique recherchée est connue.

Le modèle représente la relation mathématique entre la valeur de la caractéristique du carburant analysé et le signal délivré par l'analyseur maître.

Comme ce modèle doit être utilisé sur d'autres analyseurs et pour tenir compte des différences de réponses instrumentales entre les analyseurs maître et esclave, ainsi que des dérives dans le temps de l'analyseur esclave, plusieurs méthodes proposent de corriger le signal délivré par l'analyseur esclave. Les opérations pour effectuer ces corrections sont connues sous le nom d'opérations de transfert de calibration.

Elles consistent dans un premier temps à calculer, comme on le verra ci-après, des coefficients de correction du signal et à les stocker sous forme d'une matrice de transfert. Cette dernière est ensuite utilisée pour corriger chaque signal délivré par l'analyseur esclave pour chaque échantillon de carburant dont on veut connaître la valeur de la caractéristique.

Les coefficients de correction sont calculés de la manière suivante :

On sélectionne par exemple 10 échantillons de carburants de standardisation représentatifs de la population des carburants à analyser, dont la valeur de la caractéristique est connue.

Les analyseurs maître et esclave sont alimentés avec ces carburants, et délivrent chacun un signal pour chaque échantillon.

On effectue une décomposition en série de FOURIER de chaque signal délivré par chacun des analyseurs.

Pour chaque échantillon de carburant de standardisation la transformée de Fourier du signal s'exprime par la formule suivante :

$$F(k) = \frac{1}{N} \sum_{i=0}^{N-1} yi \ \exp(-j2i\pi\frac{k}{N})$$

dans laquelle :

- les yi sont les valeurs d'un signal décomposé en N points,
- i varie de 0 à N-1
- k varie de 0 à N-1
- les F(k) sont les valeurs résultantes de la transformée de Fourier à la fréquence k/N, cependant il n'est pas nécessaire d'utiliser la transformée de Fourier complète, mais seulement les n premières valeurs de F(k) avec k compris entre 0 et n, n étant très petit devant N-1.

La valeur de n est déterminée par un critère d'arrêt reflètant la convergence entre le signal recomposé par transformée de Fourier inverse et le signal vrai d'au moins un des carburants de standardisation.

Pour ce signal on sélectionne les coefficients n compris entre 20 et 40, puis on recompose le signal avec ces n coefficients.

On calcule ensuite la racine carrée (RSD) de la somme des carrés des différences entre les valeurs d'absorbance pour chaque longueur d'onde, et la moyenne (ME) des écarts. A partir de ces valeurs on calcule les différences premières ($\Delta$1R) des RSD, puis les différences secondes ($\Delta$2R)ce qui donne un tableau tel que le suivant :

| n | ME | $\Delta$1R | $\Delta$2R |
|----|------|------|--------|
| 30 | 0,81 | - | - |
| 31 | 0,64 | 0,17 | - |
| 32 | 0,52 | 0,12 | 0,05 |
| 33 | 0,43 | 0,09 | 0,03 |
| 34 | 0,34 | 0,09 | 0, |
| 35 | 0,32 | 0,02 | 0,07 |
| 36 | 0,20 | 0,12 | - 0,10 |
| 37 | 0,17 | 0,03 | 0,09 |
| 38 | 0,12 | 0,05 | - 0,02 |

On retient comme critère d'arrêt le critère de Cattel qui correspond à une inversion de signe de $\Delta$2R, ce qui donne la valeur n = 35 dans notre exemple.

On obtient ainsi pour chaque signal deux séries de coefficients de la transformée de Fourrier :

- les coefficients réels $r_1$, $r_2$, ........ $r_{35}$
- les coefficients imaginaires $k_1$, $k_2$, .... $k_{35}$

On choisit comme relation mathématique entre les coefficients ainsi obtenus, une relation linéaire telle que:

$$\hat{B} = \alpha + \beta A$$

dans laquelle :

A représente la matrice des coefficients obtenus par la transformée de Fourier des signaux délivrés par l'analyseur maître.

$\hat{B}$ représente la matrice des coefficients estimés au sens des moindres carrés de la transformée de Fourier des signaux de l'analyseur esclave.

$\alpha$ et $\beta$ sont respectivement les matrices de coefficients de pente et de coefficients d'ordonnées à l'origine, estimés par l'algorithme des moindres carrés.

$\alpha$ et $\beta$ définissent la matrice de transfert.

On recompose au moyen de la transformée de Fourier inverse les signaux des produits analysés sur l'analyseur esclave, à partir de leurs coefficients estimés.

On valide la matrice de transfert en comparant les signaux des produits analysés sur l'analyseur maître avec les signaux corrigés des mêmes produits analysés sur l'analyseur esclave selon deux méthodes :

. On calcule les écarts des RSD respectifs.
. On applique le modèle de calibration aux signaux de l'analyseur maître et aux signaux de l'analyseur esclave. On compare les valeurs de la caractéristique étudiée, obtenues respectivement avec les deux analyseurs, puis on teste le degré de signification des écarts observés.

Si les résultats du calcul des RSD dépassent une valeur déterminée expérimentalement ou si les valeurs des écarts observés par la deuxième méthode sont trop élevés, on reprend les étapes précédentes en modifiant les hypothèses de calcul jusqu'à obtenir la convergence.

Tout signal obtenu sur l'analyseur esclave alimenté par un produit dont on recherche la caractéristique, est décomposé en série de Fourier. On calcule pour ce signal la valeur de n selon le même critère que celui choisi précédemment. Une différence positive ou négative de 2 entre la valeur de n déterminée par ce signal et celle obtenue précédemment indique une anomalie, dont les causes seront recherchées dans une étape ultérieure.

Si aucune anomalie n'est détectée, le signal décomposé de l'analyseur esclave est recomposé à partir des coefficients corrigés par l'algorithme de transfert. Ensuite on applique le modèle de calibration déterminé sur l'instrument maître, au signal recomposé de l'instrument esclave pour obtenir la caractéristique recherchée.

Pour suivre et contrôler le fonctionnement de l'analyseur esclave ou celui de l'unité de fabrication à laquelle il est raccordé on utilise des cartes de contrôle univariées.

Chaque carte suit l'évolution d'un paramètre, par exemple : le nombre n, les coefficients $\alpha$ et/ou $\beta$, les RSD. On utilise également une carte monovariée pour suivre l'évolution de la caractéristique recherchée issue du modèle comme résultat de l'algorithme de transfert.

On peut également utiliser des cartes multivariées pour faire une analyse en composantes principales (ACP) sur les valeurs des coefficients $\alpha$ et $\beta$ qui constituent la matrice de transfert.

Les valeurs limites du ou des paramètres de contrôle et de suivi sont déterminées expérimentalement notamment en fonction de la plage d'évolution acceptable de la caractéristique recherchée.

Si la ou les valeurs du ou des paramètres de contrôle et de suivi sont à l'intérieur des limites déterminées précédemment, la procédure d'analyse se poursuit.

Dans le cas contraire, un dépassement des valeurs limites est caractéristique d'une anomalie dont la cause devra être recherchée dans une étape suivante.

Si les valeurs d'un paramètre de suivi restent dans les limites déterminées, mais que ces valeurs évoluent de manière non aléatoire (par exemple linéairement dans le temps) il faut définir des règles de suivi adaptées au problème détecté et au paramètre suivi.

Les causes de décalage sont analysées en mettant en oeuvre une méthode de type causes/effets grâce à laquelle sont identifiées les causes des anomalies détectées, par exemple, la qualité du produit analysé, le fonctionnement des analyseurs maître ou esclave, le modèle de calibration, l'algorithme de transfert, ou le disfonctionnement de l'unité de fabrication à laquelle est raccordé l'analyseur esclave.

Exemple 2 :

Selon un deuxième mode de réalisation de l'invention, la relation mathématique choisie dans le premier mode de réalisation, $\hat{B} = \alpha + \beta A$ est remplacée par une relation à base de réseaux de neurones.

Selon le deuxième mode de réalisation on choisit un réseau à retropropagation du gradient d'architecture 35 - 4 - 35.

Avec cette architecture on arrive à un nombre de poids de 319.

Le nombre de valeurs de la matrice de transfert est égal à 35 x 10 soit 350 . Dans notre exemple le nombre de signaux, pris en compte pour l'élaboration de la matrice de transfert égal à 10, est un nombre limite inférieur si l'on fait référence à un mode de calcul généralement utilisé.

On suit l'évolution dans le temps des paramètres de la matrice de transfert ou des paramètres ayant servis à son élaboration, en suivant le nombre des neurones dans la couche cachée et/ou l'évolution des poids et de leur distance vis à vis de seuils déterminés expérimentalement.

On établi un tableau des défaillances dont le suivi de l'ensemble des éléments permet de déceler des évolutions de la fabrication des produits, de détecter des dérives dans le temps de cette fabrication, de détecter la présence de produits particuliers et l'existence de perturbations autres que celles liées aux appareils.

**Revendications**

1. Procédé de suivi et de contrôle du fonctionnement d'un analyseur esclave et d'une unité de fabrication à laquelle il est raccordé, caractérisé en ce qu'il comprend une opération de calibration multivariée d'un analyseur maître, des opérations périodiques de standardisation des signaux délivrés par l'analyseur esclave alimenté par des produits de standardisation et une étape de transfert de calibration au cours de laquelle sont calculés des paramètres associés à un algorithme de transfert de calibration, et en ce que l'on choisit, d'une part, au moins un desdits paramètres ou une combinaison mathématique d'au moins deux d'entre eux comme indicateur de suivi et de contrôle du fonctionnement de l'analyseur esclave et d'autre part une méthode de suivi et de contrôle, et en ce que à l'issue de chaque opération périodique de standardisation on surveille l'évolution dans le temps de la valeur de l'indicateur de suivi et de contrôle en appliquant la méthode de suivi et de contrôle, puis on vérifie le bon fonctionnement de l'analyseur esclave et celui de l'unité de fabrication à laquelle il est raccordé en identifiant les causes de l'évolution de la valeur de l'indicateur à partir, des résultats obtenus par l'application de la méthode de suivi et de contrôle et d'un diagramme causes / effets.

2. Procédé selon la revendication 1 caractérisé en ce que l'analyseur esclave et l'analyseur maître sont le même analyseur utilisé à des périodes de temps différentes.

3. Procédé selon la revendication 1 ou 2 caractérisé en ce que après détection d'une dérive significative de l'indicateur de suivi et de contrôle on vérifie la validité des résultats de l'analyseur maître en le considérant comme l'analyseur esclave.

4. Procédé selon l'une des revendications 1 à 3 caractérisé en ce que, lors des opérations de standardisation consistant pour au moins l'une d'entre elles, d'une part à décomposer en série les signaux délivrés par les analyseurs maître et esclave, et d'autre part à établir une relation mathématique entre les coefficients issus des décompositions en série, on choisit comme indicateur de suivi et de contrôle un des paramètres calculés pour définir ladite relation mathématique ou une combinaison mathématique d'au moins deux desdits paramètres.

5. Procédé selon l'une des revendications 1 à 3 caractérisé en ce que, lors des opérations de standardisation consistant pour au moins l'une d'entre elles, d'une part à décomposer en série les signaux délivrés par les analyseurs maître et esclave, et d'autre part à établir une relation mathématique entre les coefficients issus des décompositions en série ladite relation mathématique étant représentée par des réseaux de neurones on choisit comme indicateur de suivi et de contrôle un des paramètres calculés pour définir les réseaux de neurones ou une combinaison mathématique d'au moins deux desdits paramètres

6. Procédé selon l'une des revendications 1 ou 2 caractérisé en ce que, lors des opérations de standardisation dont au moins l'une d'entre elles fait intervenir un calcul matriciel de coefficients, on choisit comme indicateur de suivi et de contrôle une matrice de coefficients issus dudit calcul ou une combinaison d'au moins deux matrices desdits coefficients.

7. Procédé selon l'une quelconque des revendications 1 à 6 caractérisé en ce que la méthode de suivi et de contrôle met en oeuvre au moins une carte de contrôle monovariée.

8. Procédé selon l'une quelconque des revendications 1 à 6 caractérisé en ce que la méthode de suivi et de contrôle met en oeuvre au moins une carte de contrôle multidimentionnelle.

9. Procédé selon l'une quelconque des revendications 1 à 6 caractérisé en ce que la méthode de suivi et de contrôle met en oeuvre au moins un réseau de neurones.

10. Procédé selon l'une quelconque des revendications 1 à 9 caractérisé en ce que les opérations de standardisation mettant en oeuvre au moins deux techniques différentes de standardisation le diagramme de causes / effets est réalisé à partir des coefficients issus d'au moins deux desdites techniques;

11. Procédé selon l'une quelconque des revendications 1 à 10 caractérisé en ce que les signaux délivrés par les analyseurs maître et esclave sont soumis préalablement à des opérations de dérivation par rapport au temps.